# EUROPEAN PATENT APPLICATION

(11) **EP 2 151 949 A1**
(43) Date of publication of application: **10.02.2010**
(21) Application number: 08757795.3
(22) Date of filing: 20.06.2008
(51) Int. Cl.: H04L 12/24

(54) **A METHOD, APPARATUS AND SYSTEM FOR INFORMING WARNING MESSAGE**

(30) Priority: 28.06.2007 CN 200710127503
(71) Applicant: Huawei Technologies Co., Ltd., Longgang District, Shenzhen Guangdong 518129 (CN)
(72) Inventor: CHEN, Yixin, Guangdong 518129 (CN)
(74) Representative: Thun, Clemens
(86) International application number: PCT/CN2008/071386
(87) International publication number: WO 2009/000195

(57) **Abstract**

A warning message informing method includes the steps of receiving a reported warning message and acquiring an identity mark of the warning message receiver, sending the reported warning message and the identity mark of the warning message receiver to the instant message server which sends the warning message in the instant message according to the identity mark of the receiver. An apparatus and system for informing warning message are also disclosed.

## Description

This application claims priority to Chinese Patent Application No. 200710127503.5, entitled "ALARM INFORMATION NOTIFYING METHOD, DEVICE AND SYSTEM" and filed with the Chinese Patent Office on June 28, 2007, which is hereby incorporated by reference in its entirety.

### FIELD OF THE INVENTION

The present invention relates to a network management technology and in particular to an alarm information notifying method, device and system.

### BACKGROUND OF THE INVENTION

Currently, an instant message system is becoming an essential communication tool for people and has become an important part of office software in a large number of companies with the trend of replacing functionality of Emails.

A Network Management System which is a software system for management on various telecommunication equipments includes an Element Management System (EMS) and a Network Management System (NMS). The EMS is a system for direct management on a Mobile Equipment (ME), which is also generally referred to an Operation Management Center (OMC), and the NMS manages an affiliated EMS and network-level resources and also possibly manages an ME.

The Network Management System implements centralized management on various telecommunication equipments. Alarm management which is an important function offered by the Network Management System to a user can allow the user to receive a telecommunication equipment alarm, view an alarm reason, handle an equipment failure, make a statistic of network alarm information, etc., through the alarm management to thereby discover and predict a network failure, guarantee a timely recovery of normal network operation upon occurrence of a network failure and reduce a loss due to a telecommunication equipment failure. It is also an important function of the alarm management that the Network Management System can notify a related equipment maintenance personnel in an as-timely-as-possible manner upon reception of a telecommunication equipment alarm, and the existing Network Management System has been enabled to notify the equipment maintenance personnel about alarm information by means of a short message or Email function upon reception of an alarm.

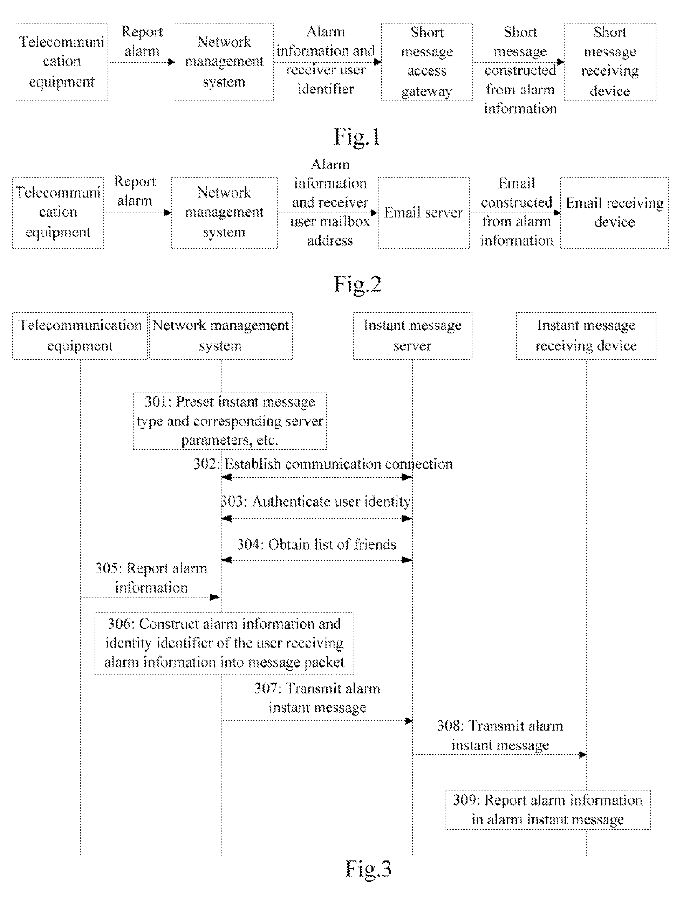

Fig.1 illustrates a schematic diagram in which a Network Management System converts alarm information into a short message. Upon reception of an alarm reported from a telecommunication equipment, the Network Management System transmits alarm information and a user identifier of an equipment maintenance personnel who receives the alarm information to an existing short message access gateway including a short message gateway and a short message MODEM in accordance with preconfigured information. The short message access gateway constructs the received alarm information into a short message, and transmits the short message to a short message receiving device of the equipment maintenance personnel who receives the short message over a telecommunication network in accordance with the user identifier of the equipment maintenance personnel who receives the alarm information, and the maintenance personnel can know brief information of the alarm from the short message upon reception of the short message.

However, transmission of alarm information through a short message may have the following drawbacks due to the intrinsic nature of the short message mechanism.

1. Information is limited in length. A short message is generally limited in length, for example, to 70 characters, or 786 characters, etc., and consequently little alarm information can be transmitted in a short message. If alarm information to be currently transmitted is relatively long, then it has to be transmitted in a plurality of short messages, which may influence real-time transmission of the alarm information.

2. Alarm information is converted into short messages with a low efficiency. Because the existing short message access gateway operates and processes at a low speed, the short message access gateway converts alarm information into short messages with a low efficiency, and consequently only several messages are converted per minute. The processing speed is slow especially in the case of a large number of alarms and may thus influence real-time transmission of the alarm information.

3. Alarm information is transmitted with a high cost. Because very different accesses to a short message communication network in a telecommunication network can be enabled by hardware or software and restriction is imposed by practical application context, short message access gateways used by operators may be very different, the Network Management System has to regenerate a set of adaptive codes for each new short message access equipment, which may result in an access with a high cost, and hence costly transmission of alarm information.

4. Alarm information can only be transmitted in the form of short message other than being converted into other forms. Because the existing short message access gateway has not been fully integrated with another communication system, a function cannot be simply enabled for convenient conversion of a short message into an Email, a phone call, etc., for transmission. Consequently, the equipment maintenance personnel cannot be notified conveniently of alarm information through an Email, a phone call, etc., even if the alarm information is converted into a short message.

5. Alarm information is transmitted with low security. No secure transmission can be guaranteed due to transmission of plain data when alarm information is transmitted in a short message with use of the existing short message transmission mechanism.

Fig.2 illustrates a schematic diagram in which a Network Management System converts alarm information into an Email. Upon reception of an alarm reported from telecommunication equipment, the Network Management System transmits alarm information and a mailbox address of equipment maintenance personnel who receives the alarm information to an Email server in accordance with preconfigured information. The Email server constructs the received alarm information into an Email, and transmits the Email to an Email receiving device of the equipment maintenance personnel over a telecommunication network in accordance with the mailbox address of the equipment maintenance personnel who receives the alarm information, and the equipment maintenance personnel can know the alarm information from the Email upon reception of the Email.

However, transmission of alarm information through an Email may have the following drawbacks.

1. Alarm information cannot be transmitted well in a real-time way. An Email is a communication approach with poor real-time performance, a long transmission period and a large delay, which may be unacceptable to alarm information with a high real-time requirement because users generally require a network error to be corrected and recovered in the minimum period of time.

2. Alarm information can only be transmitted in the form of Email other than being converting into other forms. Similar to a short message, a function cannot be simply enabled for convenient conversion of an Email into a short message, a phone call, an instant message, etc., because the existing Email system has not been conveniently integrated with other communication systems.

### SUMMARY OF THE INVENTION

Embodiments of the invention provide an alarm information notifying method, system, device and system which can improve timely performance and transmission efficiency of alarm information.

An alarm information notifying method provided in an embodiment of the present invention includes: receiving reported alarm information and obtaining an identity identifier of a receiver of the alarm information; and transmitting the reported alarm information and the identity identifier of the receiver of the alarm information through an instant message to an instant message server, which is configured to transmit the alarm information in the instant message in accordance with the received identity identifier.

An instant message adaptation device provided in an embodiment of the present invention includes: a Network Management System interface module, configured to parse a message packet received from a Network Management System and obtain alarm information and an identity identifier of a receiver user of the alarm information, and transmit the alarm information and the identity identifier; an adaptation unit configured to encapsulate the alarm information and the identity identifier received from the Network Management System interface module into an alarm instant message; and an instant message communication interface configured to transmit the alarm instant message to an instant message system.

A Network Management System provided in one embodiment of the present invention includes: an alarm processing module configured to receive alarm information reported from a telecommunication equipment and transmit the alarm information and an identity identifier of a receiver of the alarm information to an instant message adaptation module; and the instant message adaptation module configured to encapsulate the alarm information and the identify identifier received from the alarm processing module in an instant message for transmission in accordance with obtained communication parameters of an instant message system.

An alarm information notifying system provided in one embodiment of the present invention includes: a Network Management System configured to receive alarm information reported from a telecommunication equipment and transmit, through an instant message, the alarm information and an identity identifier of a receiver of the alarm information to an instant message server; and the instant message server configured to receive and transmit the alarm instant message to the receiver corresponding to the identity identifier.

Another alarm information notifying system provided in one embodiment of the present invention includes: a Network Management System configured to receive alarm information reported from a telecommunication equipment and transmit the alarm information and an identity identifier of a receiver of the alarm information to an instant message adaptation device; the instant message adaptation device configured to construct the received alarm information and identity identifier of the receiver of the alarm information into an alarm instant message and transmit the alarm instant message to an instant message server; and the instant message server configured to receive and transmit the alarm instant message to the receiver corresponding to the identity identifier.

In the embodiments of the invention, by using a communication connection established between the Network Management System and the instant message system, the Network Management System transmits alarm information through an alarm instant message upon reception of the alarm information from the telecommunication equipment. Because of the advantage of rapid and convenient transmission of an instant message, the problem of poor real-time performance due to conversion of alarm information into an Email or a short message for transmission can be addressed; and because there is no strict restriction on the number of words in an instant message, typically up to several hundreds of words in a message, this can also address the drawback of a limited length of alarm information due to conversion of alarm information into a short message for transmission and the problem of transmission of alarm information with low efficiency. Accordingly, the method, system and device according to the invention can improve timely performance and transmission efficiency of alarm information.

Further in the embodiments of the invention, because the instant message system can be communicatively connected directly with the Network Management System over a network and there are just a few of types of instant message systems, the problem of a high cost due to conversion of alarm information into a short message for transmission can be addressed; and because the instant message system can be integrated with another communication system via a network, the problem that alarm information can only be transmitted in the form of Email other than being converting into other forms can be addressed.

### BRIEF DESCRIPTION OF THE DRAWINGS

Fig.1 illustrates a schematic diagram in which a Network Management System converts alarm information into a short message in the conventional art;

Fig.2 illustrates a schematic diagram in which a Network Management System converts alarm information into an Email in the conventional art;

Fig.3 illustrates a flowchart of an alarm information notifying method according to an embodiment of the present invention;

Fig.4 illustrates a graphic interface for setting instant message parameters according to an embodiment of the present invention;

Fig.5 illustrates a graphic interface for setting an alarm information filtering condition according to an embodiment of the present invention;

Fig.6 illustrates a flowchart of another alarm information notifying method according to another embodiment of the present invention;

Fig.7 illustrates a schematic diagram of an alarm information notifying device according to an embodiment of the present invention;

Fig.8 illustrates a schematic diagram of a Network Management System for notifying alarm information according to an embodiment of the present invention;

Fig.9 illustrates a schematic diagram of an alarm information notifying system including a Network Management System integrated with an instant message adaptation device according to an embodiment of the present invention; and

Fig.10 illustrates a schematic diagram of an alarm information notifying system including a Network Management System and an instant message adaptation device which are separated from each other according to an embodiment of the present invention.

### DETAILED DESCRIPTION OF THE INVENTION

In embodiments of the invention, a Network Management System receives alarm information reported from a telecommunication equipment over a communication connection established between the Network Management System and an instant message system and transmits the alarm information to an equipment maintenance personnel in an instant message over the communication connection, thereby enabling transmission of the alarm information by the instant message system. The embodiments of the invention also make use of intercommunication between an instant message server of the instant message system and another system to further convert the alarm instant message into a short message, an Email, or voice, etc., for transmission to the equipment maintenance personnel which is simply referred to as a maintenance personnel hereinafter.

The embodiments of the invention will be further described in details below with reference to the drawings to make their objects, aspects and advantages more apparent.

Fig.3 illustrates a flowchart of an alarm information notifying method according to a first embodiment of the invention, and this method involves network entities including telecommunication equipment, a Network Management System, an instant message server and an instant message receiving device for receiving an alarm message by a receiver maintenance personnel. An instant message adaptation device is integrated in the Network Management System in this embodiment, and a method for transmitting alarm information through an instant message will be described by way of an example of Microsoft MSN in this embodiment as including the following processes.

Block 301: An instant message type and instant message server information corresponding therewith and an identity identifier of a receiver maintenance personnel of alarm information are preset via a graphic interface on the Network Management System.

In this step, the instant message server information may be an address of an instant message server.

In this step, an encryption parameter for encrypting an instant message can further be preset via a graphic interface of the Network Management System.

Because there are just a few common types of instant message systems at present, adaptation methods for converting alarm information into various common instant messages can be solidified in the Network Management System, so that alarm information reported from the telecommunication equipment can be converted as required for user into an instant message supported by the receiver maintenance personnel for transmission to the receiver maintenance personnel, thereby addressing the problem in the conventional art of a high cost due to conversion of alarm information into a short message for transmission.

Indeed, this step is intended to set communication parameters of the instant message system, which include the instant message type and the instant message server information corresponding therewith and the identity identifier of the receiver maintenance personnel of alarm information and possibly also include the encryption parameter for encryption of alarm information.

In this step, the communication parameters of the instant message system can be stored in a configuration file or database of the Network Management System and retrieved from the configuration file or database of the Network Management System as required for use. The user can modify the communication parameters of the instant message system and stored in the configuration file or database of the Network Management System via a graphic interface or manually.

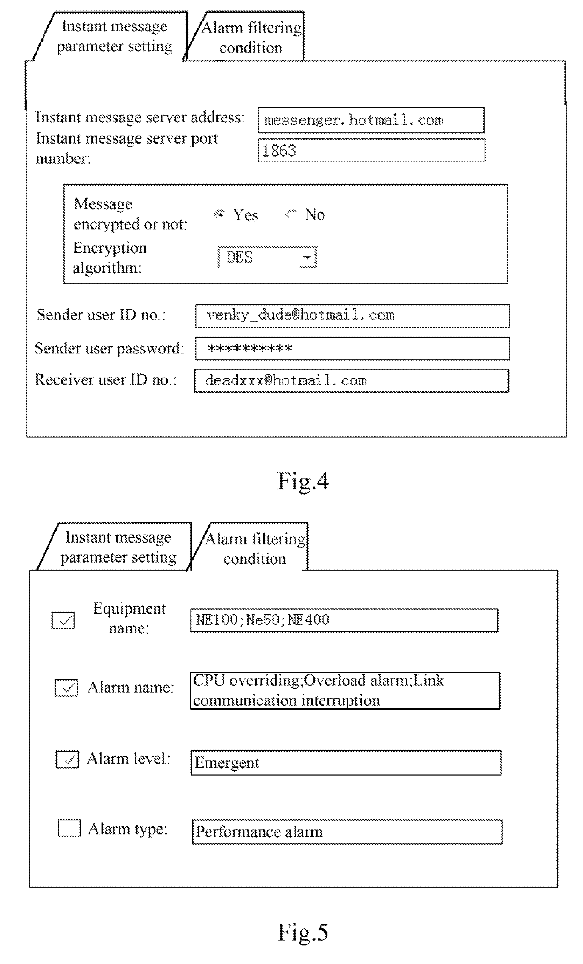

Fig.4 and Fig.5 each illustrate a graphic interface presented to the user to set parameters and conditions through the Network Management System, where Fig.4 illustrates an interface for setting instant message parameters, and Fig.5 illustrates an interface for setting an alarm information filtering condition. Particularly due to the use of Microsoft MSN for transmission of an alarm instant message in this embodiment, the instant message server is provided with an address of messenger.hotmail.com and a port number of 1863, and the alarm instant message shall be encrypted in a Data Encryption Standard (DES) algorithm. Further, sender IDs and receiver IDs and a sender encryption parameter are shown in Fig.4, where a sender is the user who logs in the Network Management System and a receiver is typically a maintenance personnel. In the instant message system, each instant message user is provided with a unique user identifier, for example, an integer number for QQ, a mailbox address for MSN, etc. In this embodiment, for example, the sender ID is venky_dude@hotmail.com, and the receiver ID is deadxxx@hotmail.com. In Fig.5, the user shall set a condition for transmission of an alarm instant message through the Network Management System, and the setting in Fig.5 means that an alarm instant message can be send upon occurrence of an emergent alarm of CPU overriding, an overload alarm or link communication interruption among the range of three equipments NE100, NE50 or NE400.

In this embodiment, the encryption parameter can generally include a user definable type of an algorithm for encryption of an instant message.

Block 302: A communication connection is established between the Network Management System and the instant message system.

In this embodiment, it is unnecessary to reestablish a communication connection for each transmission of an alarm instant message, instead, all desired communication connections can be established upon initialization, and an alarm instant message can be transmitted over a corresponding communication connection.

The instant message type and the instant message server information, e.g., the address and the port number of the instant message server are set by the user, and the instant message server information can be pre-stored in a configuration file or database of the Network Management System and retrieved from the configuration file or database of the Network Management System as required for use. The user can modify the instant message server information stored in the configuration file or database of the Network Management System via a graphic interface or manually.

A process of establishing a communication connection particularly includes the following processes.

Block 3021: The Network Management System transmits a connection request to a instant message server with the address of messenger.hotmail.com and the port number of 1863 in accordance with the instant message server information (including the address and the port number).

Block 3022: The instant message server returns a response to the Network Management System, thereby establishing a connection successfully.

Block 3023: The Network Management System transmits version numbers of an instant message software, which is supported by itself, to the instant message server.

Block 3024: The instant message server verifies the versions of the instant message software supported by the Network Management System and communicates with each other by means of a version supported by both parties.

This step is intended to verify the versions of MSN. The Network Management System shall firstly transmit version numbers of all MSN, which is supported by itself, to the instant message server, and the instant message server returns a response, in order to notify the Network Management System about the version number for subsequent message transmission, for example, MSN7.0.

Block 303: The instant message server authenticates the user identity.

A specific process of this step is as follows.

In block 3031: The Network Management System transmits to the instant message server a message requesting for an encryption secure packet.

Unlike other instant communication software, MSN requires encryption of an encryption parameter for transmission of the encryption parameter to ensure no easy leakage of the encryption parameter in the case that the transmission port is monitored. Therefore the Network Management System shall firstly transmit to the instant message server a request for obtaining a name of secure packet, which is supported by an instant message server and used for encryption of the encryption parameter.

Block 3032: The instant message server returns the name of the encryption secure packet in a response message.

Block 3033: The Network Management System transmits its own identity identifier and the encrypted encryption parameter to the instant message server.

Upon reception of the secure packet supported by the instant message server, if the secure packet is also supported by the Network Management System, the Network Management System transmits the ID of the Network Management System, i.e., venky_dude@hotmail.com, and the encryption parameter encrypted with the secure packet to the instant message server.

The Network Management System transmits to the instant message server the encryption parameter encrypted with the secure packet. Given a secure packet as MD5, the encryption process is as follows: a set of MD5 stochastic information codes is generated in accordance with MD5 algorithm and combined with the encryption parameter into the encrypted encryption parameter. Upon reception of the encrypted encryption parameter, the instant message server generates stochastic information codes in accordance with the same algorithm and compares them with the stochastic information codes contained in the encrypted encryption parameter. If they are the same, then verification is passed, and a confirmation message is returned to the Network Management System.

Block 3034: The instant message server verifies the user ID and determines whether it stores relevant information of the user to which the ID belongs, and if not, then the instant message server transmits to the Network Management System an address of another instant message server where the relevant information of the user is stored, and the Network Management System transmits its own ID to said another instant message server which in turn returns a confirmation; if yes, the instant message server returns a confirmation directly to the Network Management System.

Block 3035: Authentication of the user identity is completed.

Block 304: The Network Management System changes information of its own status on MSN to ONLINE and transmits to the instant message server a request for retrieving its own list of friends. The instant message server returns in a response message the list of friends of the Network Management System on MSN.

Block 305: The telecommunication equipment reports alarm information to the Network Management System via an interface between the equipment and the Network Management System.

In an embodiment of the invention, the following interfaces may be present between the equipment and the Network Management System.

(1) int InitIMConn (char * ServerAddress, int ServerPort, char * UserID, char * UserPassword); this interface is used for establishment of a communication link and logging in, where ServerAddress denotes the address of the server, ServerPort denotes the port of the server, UserID denotes the ID of the logging user, UserPassword denotes an encryption parameter of the logging user, and a return value of 0 indicates a connection success while other return values indicate a connection failure.

(2) int SendMessage (char * SendUserID, char * RecvUserID, char * MsgData); this interface is used for transmission of an alarm instant message, where SendUserID denotes the ID of the message transmitting user, RecvUserID denotes the ID of the message receiving user, MsgData denotes contents of the message, and a return value of 0 indicates a transmission success while other return values indicate a failure.

(3) int CloseIMConn (char * ServerAddress, int ServerPort, char * UserID); this interface is used to disable the communication connection with the instant message server, where ServerAddress denotes the address of the server, ServerPort denotes the port of the server, UserID denotes the ID of the logging user, and a return value of 0 indicates a disablement success while other return values indicate a failure. The telecommunication equipment may disable the corresponding connection via this interface when it is needed to notify maintenance personnel through MSN instant message.

(4) int EncryptMsg (char * InputMsgData,char * OutputMsgData); this interface is used for encryption of an alarm instant message, where InputMsgData denotes a message to be encrypted, OutputMsgData denotes the encrypted message, and a return value of 0 indicates an encryption success while other return values indicate a failure. This embodiment of the invention supports encryption of an alarm instant message to be transmitted, and a setting can be made via this interface when encryption is required. After the alarm instant message is encrypted, externally attached software shall be installed for a device in reception of the instant message to decrypt the message in the same DES algorithm.

Blocks 306 to 307: Upon reception of the alarm information reported from the telecommunication equipment, the Network Management System constructs the alarm information and the identity identifier of the receiver maintenance personnel of the alarm information into an alarm instant message and transmits the message to the instant message server over the above communication connection.

Optionally, the received alarm information can be DES encrypted as required in practice, and the encrypted alarm information and the identity identifier of the receiver maintenance personnel of the alarm information are constructed into an alarm instant message and transmitted to the instant message server. The embodiment of the invention can further enable security of transmission of the alarm information by encrypting the alarm information.

Block 308: The instant message server transmits the alarm instant message to the instant message receiving device of the maintenance personnel in accordance with the identity identifier of the maintenance personnel.

This embodiment transmits an alarm instant message by MSN, in which all alarm instant messages are transmitted and received by a SwitchBoard server. And therefore the Network Management System can transmit an alarm instant message to the instant message receiving device of the maintenance personnel only after it firstly obtains an address of the SwitchBoard server through the instant message server and establishes a connection with the SwitchBoard server. Therefore, the SwitchBoard server is a instant message server.

Block 309: The instant message receiving device of the maintenance personnel receives the alarm instant message, decrypts the alarm information in the alarm instant message by the externally attached software for decryption if the alarm information has been encrypted, and presents the message to the maintenance personnel.

Security of transmission of the alarm instant message can be guaranteed because the embodiment of the invention supports for encryption of the alarm instant message.

In the above process, the Network Management System transmits the alarm information to the instant message system upon reception of the alarm information, and the instant message system notifies the alarm information to a specific maintenance personnel, thereby integrating work and daily communication of the maintenance personnel and facilitating rapid obtainment of an alarm notification by the maintenance personnel.

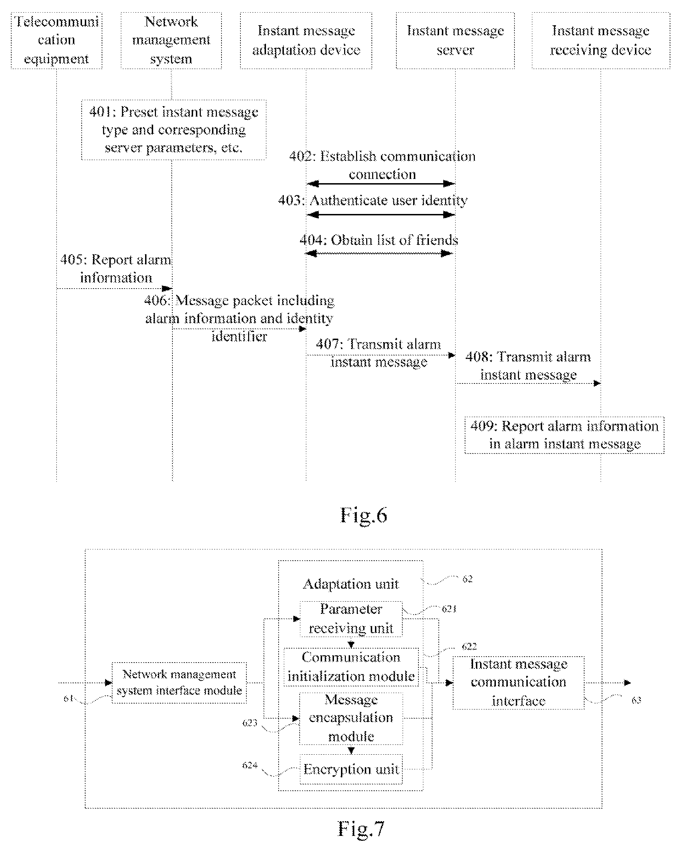

Fig.6 illustrates a flowchart of an alarm information notifying method according to another embodiment of the present invention, and this method involves network entities including telecommunication equipment, a Network Management System, an instant message adaptation device, an instant message server and an instant message receiving device for receiving an alarm message by a maintenance personnel. A method for transmitting alarm information through an instant message will be described by way of an example of Microsoft MSN in this embodiment as follows.

Block 401: An instant message type and instant message server information corresponding therewith and an identity identifier of a receiver maintenance personnel of alarm information are preset via a graphic interface on the Network Management System so as to be provided to the instant message adaptation device as retrieved by the instant message adaptation device.

In this step, the instant message type and the instant message server information corresponding therewith and the identity identifier of the receiver maintenance personnel of alarm information can be pre-stored in a configuration file or database of the Network Management System so as to be retrieved directly from the configuration file or database of the Network Management System by the instant message adaptation device for retrieval. The user can modify the instant message type and the instant message server information corresponding therewith and the identity identifier of the receiver maintenance personnel of alarm information stored in the configuration file or database of the Network Management System via a graphic interface or directly manually.

In this step, the instant message server information may be an address of an instant message server.

In this step, an encryption parameter for encryption of an instant message can further be preset via a graphic interface on the Network Management System. The encryption parameter can also be stored in the configuration file or database of the Network Management System and modified by the user via a graphic interface or directly manually.

Block 402: The instant message adaptation device and the instant message system establish a communication connection.

In this embodiment, it is unnecessary to reestablish a communication connection for each transmission of an alarm instant message, instead, all desired communication connections may be established upon initialization, and an alarm instant message for transmission can be transmitted over a corresponding communication connection as required. Specific steps of establishing a communication connection are as the blocks 3021 to 3024 in Fig.3 except that they are performed by the instant message adaptation device instead of the Network Management System.

Particularly, the instant message adaptation device can retrieve the stored instant message server information from the configuration file or database of the Network Management System or receive the instant message server information preset at the Network Management System from the Network Management System for establishment of a communication connection with the instant message system. Of course, the instant message adaptation device can store at itself the retrieved instant message server information for subsequent reestablishment of communication with the instant message system.

Block 403: The instant message adaptation device authenticates the user identity.

Specific steps of identity authentication are as the blocks 3031 to 3035 in Fig.3 except that they are performed by the instant message adaptation device instead of the Network Management System.

During authentication of the user identity, the instant message adaptation device can retrieve the stored encryption parameter from the configuration file or database of the Network Management System or receive the encryption parameter preset at the Network Management System from the Network Management System for authentication of the user identity. Of course, the instant message adaptation device can store at itself the retrieved encryption parameter for subsequent encryption of alarm information.

Block 404: The instant message adaptation device changes information of its own status on MSN to ONLINE and transmits to the instant message server a request for retrieving its own list of friends. The instant message server returns in a response message the list of friends of the Network Management System on MSN.

Block 405: The telecommunication equipment reports alarm information to the Network Management System via an interface between the equipment and the Network Management System.

Block 406: Upon reception of the alarm information reported from the telecommunication equipment, the Network Management System constructs the alarm information and the identity identifier of the receiver maintenance personnel of the alarm information into a message packet and transmits the message packet to the instant message adaptation device by invoking an API or an message interface provided by the instant message adaptation device.

Block 407: The instant message adaptation device receives the message packet, de-encapsulates the packet and obtains the alarm information and the identity identifier. According to requirements in a practical application, the instant message adaptation device may or may not DES encrypt the alarm information, compose the encrypted or unencrypted alarm information and the identity identifier of the receiver maintenance personnel of the alarm information into an alarm instant message, and transmits the alarm instant message to the instant message server over the communication connection already established previously.

The embodiment of the invention can enable further security of transmission of the alarm information by encrypting the alarm information.

Descriptions of the same flow as that in the first embodiment, e.g., the blocks 408 and 409, will be omitted here. Further, the user sometimes may require alarm information to be notified to the maintenance personnel in a way other than an alarm instant message, for example, a short message, an Email, voice, etc. Because some existing instant message servers have been enabled to support for conversion of an instant message into a short message, an Email, voice, etc., for transmission to the receiver maintenance personnel, for example, conversion of an instant message into a short message is supported by QQ, therefore an alarm instant message can be converted into an alarm short message, an alarm Email, or alarm voice, etc., for transmission to a corresponding maintenance personnel.

If the instant message server is configured with a capability of converting an instant message into a short message, then the alarm instant message is transmitted to a short message receiving device of the receiver maintenance personnel in a short message over the telecommunication network.

If the instant message server is configured with a capability of converting an instant message into an Email, then the alarm instant message is transmitted to the Email receiving device of the receiver maintenance personnel in an Email over the telecommunication network.

If the instant message server is configured with a capability of converting an instant message into a voice call, then the alarm instant message is transmitted by initiating a voice call to a voice receiving device of the receiver maintenance personnel over the telecommunication network to play the alarm information to the receiver maintenance personnel.

With the above three ways, when the maintenance personnel who receives alarm information cannot receive any alarm instant message normally because the instant message receiving device is not online or fails, the alarm information can be notified to the maintenance personnel in an alternative way.

With the method according to the embodiments of the invention, the Network Management System after enabling intercommunication with the instant message system can intercommunicate with another communication system through the instant message system and further convert alarm information into a short message, an Email or voice for transmission to the maintenance personnel as required for the user.

Fig.7 illustrates a schematic diagram of an instant message adaptation device according to an embodiment of the invention, which includes: a Network Management System interface module 61, an adaptation unit 62, and an instant message communication interface 63.

A Network Management System interface module 61 is configured to parse the message packet received from the Network Management System to obtain the alarm information and the identity identifier of the receiver user of the alarm information from the message packet, and transmit the alarm information and the identity identifier to the adaptation unit 62.

The adaptation unit 62 is configured to encapsulate the received alarm information and the identity identifier into the alarm instant message.

The instant message communication interface 63 is configured to establish a communication connection with the instant message system in accordance with the instant message server information and to transmit the alarm instant message to the instant message system over the communication connection.

In the embodiment of the invention, it is unnecessary to reestablish a communication connection for each transmission of an alarm instant message, and instead, all desired communication connections can be established upon initialization.

The instant message adaptation device can be implemented with a hardware circuit or implemented as a separate process by a Software Development Kit (SDK) or a communication protocol and can interact respectively with the Network Management System and the instant message system and convert alarm information into an alarm instant message.

Particularly the adaptation unit 62 includes:

A parameter receiving unit 621 is configured to receive via the Network Management System interface module 61, the communication parameters of the instant message system transmitted from the Network Management System and store the communication parameters.

The Network Management System can pre-store the communication parameters of the instant message system in the configure file or database for retrieval by the parameter receiving unit 621.

The Network Management System can also adopt the graphic interfaces illustrated in Fig.4 and Fig.5 to prompt the network administrator for an entry of the communication parameters and a configuration method including the type of an instant message carrying alarm information, e.g., QQ, MSN, etc., (MSN in this embodiment), the server information corresponding to the selected instant message type and the identity identifier of the receiver maintenance personnel of alarm information. Each user is provided with an identifier which uniquely determines his identity in the instant message system, for example, an integer number in QQ, an Email address in MSN, etc. Furthermore a filtering condition can be set, and in the configuration of Fig.5, for example, only alarm information at an alarm level of EMERGENT can be forwarded in an instant message. Further, the encryption parameter for encryption of an alarm instant message can be included, for example the DES algorithm in this embodiment. After the user determines the communication parameters and the configuration method, the Network Management System transmits the communication parameters of the instant message system to the parameter reception unit 621 which stores the received communication parameters of the instant message system. For example, for establishment of a connection with the instant message system, the instance message communication interface 63 can establish a communication connection with the instant message server corresponding to the instant message server information in accordance with the instant message server information stored in the parameter reception unit 621.

A communication initialization module 622 is configured to log in the instant message system via the instant message communication interface 63. This module is required to retrieve the communication parameters of the instant message system in the parameter receiving unit 621, e.g., the instant message server information, etc., to thereby log in the instant message system, the MSN server messenger.hotmail.com in this embodiment.

A message encapsulation module 623 is configured to encapsulate the received alarm information and identity identifier into an alarm instant message; Specifically, the message encapsulation module 623 is configured to encapsulate the alarm information and the identity identifier into an alarm instant message by using the corresponding instant message type in accordance with the communication parameters of the instant message system stored in the parameter receiving unit 621.

Further, the adaptation unit 62 can further include an encryption unit 624 configured to encrypt the alarm information obtained by the message encapsulation module 623 in accordance with the encryption parameter among the communication parameters stored in the parameter receiving unit 621 to thereby ensure security of transmitting the alarm instant message. However, the alarm information can be decrypted only if the alarm instant module transmits the encrypted alarm information to an instant message client in which corresponding decryption software is installed.

The instant message adaptation device is a separate device as described above, and in a practical application, this device can alternatively be integrated as a module in the Network Management System to also attain the purpose of transmitting alarm information through an instant message.

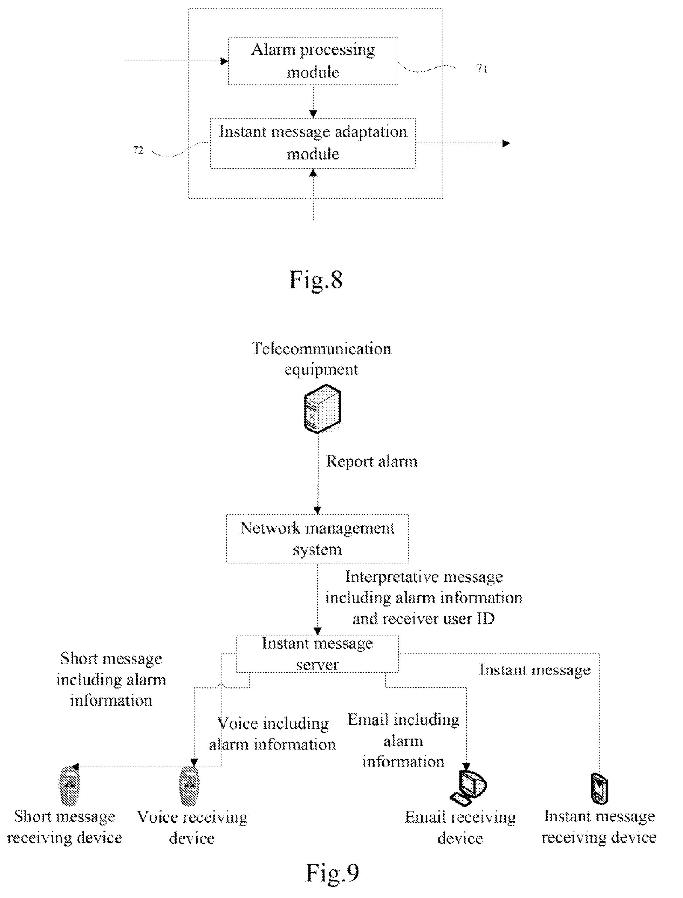

Fig.8 illustrates a schematic diagram of a Network Management System for notifying alarm information according to an embodiment of the invention, which includes an alarm processing module 71 and an instant message adaptation module 72.

The alarm processing module 71 is configured to receive alarm information reported from telecommunication equipment and to transmit the alarm information and an identity identifier of a receiver user of the alarm information to the instant message adaptation module 72.

The instant message adaptation module 72 is configured to encapsulate the alarm information and the identity identifier in an alarm instant message for transmission in accordance with obtained communication parameters of an instant message system.

The communication parameters of the instant message system can be retrieved from a first parameter setting module, and at this time, the system further includes the first parameter setting module configured to receive and transmit the user preset communication parameters of the instant message system to the instant message adaptation module.

The instant message adaptation module is a first instant message adaptation module configured to encapsulate the alarm information and the identity identifier received from the alarm processing module in an instant message for transmission in accordance with the received communication parameters of the instant message system.

The communication parameters of the instant message system can be retrieved from a second parameter setting module, and at this time, the system further includes a second parameter setting module configured to store the preset communication parameters of the instant message system.

The instant message adaptation module is a second instant message adaptation module configured to retrieve the stored communication parameters of the instant message system from the second parameter setting module and to encapsulate the alarm information and the identity identifier received from the alarm processing module into an instant message for transmission in accordance with the retrieved communication parameters of the instant message system.

In a practical application, the communication parameters of the instant message system can be stored in a configuration file or database of the Network Management System and a user can configure or modify the parameter information via a graphic interface or can directly set or modify the configuration file manually.

Fig.9 illustrates a schematic diagram of an alarm information notifying system including a Network Management System integrated with an instant message adaptation device according to an embodiment, which includes a Network Management System and an instant message server.

The Network Management System is configured to receive alarm information reported from telecommunication equipment and transmit, through an instant message, the alarm information and an identity identifier of receiver maintenance personnel of the alarm information to the instant message server.

The instant message server is configured to receive and transmit the alarm instant message to an instant message receiving device of the maintenance personnel corresponding to the identity identifier of the receiver maintenance personnel.

Preferably, the system further includes a short message system, a mail system, and a voice receiving system.

The short message system is configured to receive the alarm information and the identity identifier of the receiver maintenance personnel transmitted from the instant message server and transmit, through a short message, the alarm information and the identity identifier to the receiver maintenance personnel.

The mail system is configured to receive the alarm information and the identity identifier of the receiver maintenance personnel transmitted from the instant message server and transmit, through an Email, the alarm information and the identity identifier to the receiver maintenance personnel.

The voice receiving system is configured to receive a call initiated from the instant message server and transmit, in a voice way, the alarm information to the receiver maintenance personnel.

The above short message system, mail system and voice receiving system are not shown in Fig.9.

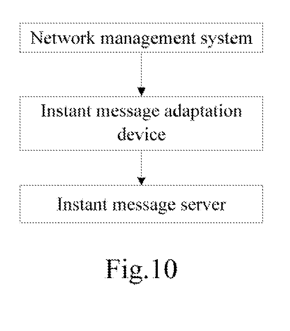

Fig. 10 illustrates a schematic diagram of an alarm information notifying system including a Network Management System and an instant message adaptation device which are separated from each other according to an embodiment, which includes a Network Management System, an instant message adaptation device, and an instant message server:

The Network Management System is configured to receive alarm information reported from telecommunication equipment and transmit the alarm information and an identity identifier of receiver maintenance personnel of the alarm information to the instant message adaptation device.

The instant message adaptation device is configured to construct the received alarm information and identity identifier of the receiver maintenance personnel of the alarm information into an alarm instant message and to transmit the message to the instant message server.

The instant message server is configured to receive and transmit the alarm instant message to an instant message receiving device of the maintenance personnel corresponding to the identity identifier of the receiver maintenance personnel.

In summary, with the method, system and device according to the embodiments of the invention, via a communication connection established between the Network Management System and the instant message system, and the Network Management System can transmit alarm information through an alarm instant message upon reception of the alarm information from the telecommunication equipment. Because the advantage of rapid and convenient transmission of an instant message, the problem of poor real-time performance due to conversion of alarm information into an Email or a short message for transmission can be addressed; and because there is no strict restriction on the number of words in an instant message, typically up to several hundreds of words in a message, this can also address the drawback of a limited length of alarm information due to conversion of alarm information into a short message for transmission and the problem of transmission of alarm information with low efficiency.

Those ordinarily skilled in the art can appreciate that the steps in the same device involved in the above methods according to the embodiments (including that illustrated in Fig.3 and that illustrated in Fig.5) can be implemented by instructing relevant hardware with a program, the program can be stored in a storage medium readable by the device, e.g., an ROM/RAM, a floppy disk, an optical disk, etc.. And corresponding processes in the above methods is performed when the program is executed.

The embodiments transmit an alarm instant message by MSN, but the invention will not be limited thereto. Instant message software such as QQ, Yahoo! Messenger, UC, etc., can notify alarm information in the method according to the invention. The above disclosure is merely illustrative of the preferred embodiments of the invention and not limitative of the scope of the invention. Any modification, variation or improvement without departing from the scope of the present invention shall all fall in the protection scope as defined in claims.

## Claims

1. An alarm information notifying method, comprising:
receiving reported alarm information and obtaining an identity identifier of a receiver of the alarm information; and
transmitting, through an instant message, the reported alarm information and the identity identifier of the receiver of the alarm information to an instant message server, which is configured to transmit the alarm information in the instant message in accordance with the received identity identifier.

2. The alarm information notifying method according to claim 1, wherein
the obtaining of an identity identifier of a receiver of the alarm information comprises:
obtaining an preset instant message type, preset instant message server information and the preset identity identifier of the receiver who receives the alarm information; or
obtaining a stored instant message type, the stored instant message server information and the identity identifier of the receiver who receives the alarm information, from a configuration file or database of a Network Management System; and
the transmitting, through the instant message the reported alarm information and the identity identifier of the receiver of the alarm information to the instant message server comprises:
constructing the alarm information and the identity identifier of the receiver into the corresponding instant message in accordance with the obtained instant message type, and transmitting the instant message to the instant message server corresponding to the obtained instant message server information.

3. The alarm information notifying method according to claim 1 or 2, further comprising: obtaining a preset encryption parameter or obtaining a stored encryption parameter from a configuration file or database of a Network Management System;
wherein the transmitting, through the instant message, the reported alarm information and the identity identifier of the receiver of the alarm information to the instant message server comprises:
encrypting the alarm information with the obtained encryption parameter, and transmitting, through the instant message, the encrypted alarm information and the identity identifier of the receiver of the alarm information to the instant message server.

4. The alarm information notifying method according to claim 1 or 2, wherein the transmitting, through the instant message, the reported alarm information and the identity identifier of the receiver of the alarm information to the instant message server comprises:
constructing the alarm information and the identity identifier of the receiver into the corresponding instant message in accordance with an obtained instant message type; and
transmitting the instant message to the instant message server corresponding to obtained instant message server information, the instant message server being configured to convert the alarm instant message into a short message and transmit the short message to a corresponding terminal being configured to decrypt the alarm information in the instant message upon reception of the instant message and obtain the decrypted alarm information.

5. The alarm information notifying method according to claim 1 or 2, wherein the transmitting, through the instant message, the reported alarm information and the identity identifier of the receiver of the alarm information to the instant message server comprises:
composing the alarm information and the identity identifier of the receiver into the corresponding instant message in accordance with an obtained instant message type; and
transmitting the instant message to the instant message server corresponding to obtained instant message server information, the instant message server being configured to convert the alarm instant message into an Email and transmit the Email to a corresponding terminal being configured to decrypt the alarm information in the instant message upon reception of the instant message and obtain the decrypted alarm information.

6. An instant message adaptation device, comprising:
a Network Management System interface module, configured to parse a message packet received from a Network Management System and obtain alarm information and an identity identifier of a receiver user of the alarm information, and transmit the alarm information and the identity identifier;
an adaptation unit, configured to encapsulate the alarm information and the identity identifier received from the Network Management System interface module into an alarm instant message; and
an instant message communication interface, configured to transmit the alarm instant message to an instant message system.

7. The instant message adaptation device according to claim 6, wherein the adaptation unit comprises:
a parameter receiving unit configured to receive via the Network Management System interface module and store communication parameters of the instant message system transmitted from the Network Management System; and
a message encapsulation module configured to encapsulate the alarm information and the identity identifier into the alarm instant message in accordance with the communication parameters of the instant message system stored in the parameter receiving unit.

8. The instant message adaptation device according to claim 6 or 7, wherein the adaptation unit further comprises:
a communication initialization module configured to log in the instant message system via the instant message communication interface in accordance with the communication parameters of the instant message system stored in the parameter receiving unit.

9. The instant message adaptation device according to claim 7, wherein the adaptation unit further comprises:
an encryption unit configured to encrypt the alarm information obtained by the message encapsulation module in accordance with the communication parameters of the instant message system stored in the parameter receiving unit.

10. A Network Management System, comprising:
an alarm processing module, configured to receive alarm information reported from a telecommunication equipment and transmit the alarm information and an identity identifier of a receiver of the alarm information to an instant message adaptation module; and
the instant message adaptation module, configured to encapsulate the alarm information and the identify identifier received from the alarm processing module into an instant message for transmission, in accordance with obtained communication parameters of an instant message system.

11. The Network Management System according to claim 10, further comprising a first parameter setting module configured to receive and transmit the user preset communication parameters of the instant message system to the instant message adaptation module;
wherein the instant message adaptation module is a first instant message adaptation module configured to encapsulate the alarm information and the identity identifier received from the alarm processing module into the instant message for transmission, in accordance with the received communication parameters of the instant message system.

12. The Network Management System according to claim 10, further comprising a second parameter setting module configured to store preset communication parameters of an instant message system;
wherein the instant message adaptation module is a second instant message adaptation module configured to obtain the stored communication parameters of the instant message system from the second parameter setting module and encapsulate the alarm information and the identity identifier from the alarm processing module into the instant message for transmission, in accordance with the stored communication parameters of the instant message system.

13. An alarm information notifying system, comprising:
a Network Management System configured to receive alarm information reported from a telecommunication equipment and transmit, through an instant message, the alarm information and an identity identifier of a receiver of the alarm information to an instant message server; and
the instant message server configured to receive and transmit the alarm instant message to the receiver corresponding to the identity identifier.

14. An alarm information notifying system, comprising:
a Network Management System configured to receive alarm information reported from a telecommunication equipment and transmit the alarm information and an identity identifier of a receiver of the alarm information to an instant message adaptation device;
the instant message adaptation device configured to construct the received alarm information and identity identifier of the receiver of the alarm information into an alarm instant message and transmit the alarm instant message to an instant message server; and
the instant message server configured to receive and transmit the alarm instant message to the receiver corresponding to the identity identifier.
